# EUROPEAN PATENT APPLICATION

(11) **EP 2 833 260 A1**
(43) Date of publication of application: **04.02.2015**
(21) Application number: 13360015.5
(22) Date of filing: 02.08.2013
(51) Int. Cl.: G06F 9/44

(54) **Method and system for graphical user interface layout generation, computer program product**

(71) Applicant: ALCATEL LUCENT, 92100 Boulogne-Billancourt (FR)
(72) Inventor: Cucinotta, Tommaso, Dublin 15 (IE)
(74) Representative: Greenwood, Matthew David

(57) **Abstract**

A computer-implemented method for generating a layout for a Graphical User Interface (GUI) for an application to be shown in a destination display context, comprising generating a measure representing available space for multiple elements of the GUI based on the display context and input parameters for the application, generating a GUI using the multiple elements for the application for display according to the context, in which the multiple elements are selected for display according to a measure of priority associated with respective ones of the elements and representing a relative importance thereof.

## Description

### TECHNICAL FIELD

The present invention relates generally to Graphical User Interfaces (GUIs), and in particular to a method and a system for generating a layout for a graphical interface.

### BACKGROUND

Applications with a GUI tend to be designed for common and widely used desktop set-ups, for example for standard monitors with a resolution around 1024x768 or 1280x800 pixels. Also, despite users being completely free to resize and place windows at their will, often developers have in mind a specific layout for an application window, often assumed to be maximized by the user, and being displayed in a typical horizontal layout for example. This impacts the layout of GUI elements in the application window and dialogs, which are located in a way that is optimum only with the display set-up that the developer had in mind.

However, more and more heterogeneous display devices are being used for accessing the same application. This happens very frequently with laptops that are continuously switched from their own display to an external monitor display (normally with much higher resolutions, reaching up to 2560x1600 pixels for example), as well as to external projectors for presentations, often supporting only a standard VGA or SVGA resolution (640x480 or 800x600 pixels for example).

Furthermore, in cloud computing scenarios, more and more desktop applications are being deployed in the cloud and made accessible through virtual desktops or dedicated and specialized client interfaces.

Development platforms for GUI-enabled applications are typically designed to allow developers to code applications in a way that is tentatively independent from the actual resolution and layout of the display: However, these are already insufficient for current applications, let alone for cloud environments where applications will be remotely accessible through mobile phones, tablets, laptops, desktop PCs, or even novel devices such as glasses with an integrated display for example, all of which with very different and heterogeneous characteristics.

Furthermore, in current GUI development frameworks window placement is typically automated through a component of the GUI subsystem (such as the Window Manager on UNIX/Xl 1-enabled systems for example) that attempts to place windows intelligently on the screen. For example, a new window can be placed in an empty area of the desktop if available, windows of applications can be started with the same layout they used and were customized to at the last time they were used, windows can be logically "stacked" on top of each other and be switched using various means (classic Alt-Tab and/or task-bar for example), or they can easily be arranged in a grid layout if/when needed. However, GUI environments can only remember the settings as used last time by the user, independently of the device that was used to access the application.

Layout components exist that allow arrangement of contained GUI elements according to various size policies (such as in a way to minimize or maximize the horizontally or vertically occupied space, or trying to keep a preferred size if possible, or putting constraints on the minimum or maximum allowed sizes). Typically however, such mechanisms and platforms limit themselves so as to allow developers to code applications so as to: display and place a number of GUI elements in an application window in a way that is aware of the available space; be notified of the changes in the window layout; so, the layout of elements can be dynamically changed and elements can be hidden/shown, if desired, the customization logic has to be handled explicitly by the developer. For example, the developer might choose to display extra buttons in a window for some advanced options if the application window is sufficiently large, so as to keep them readily accessible, or decide to hide them and leave such options accessible from the menu, if there is not enough space. However, such logic needs to be explicitly coded.

### SUMMARY

According to an example, there is provided a computer-implemented method for generating a layout for a Graphical User Interface (GUI) for an application to be shown in a destination display context, comprising generating a measure representing available space for multiple elements of the GUI based on the display context and input parameters for the application, generating a GUI using the multiple elements for the application for display according to the context, in which the multiple elements are selected for display according to a measure of priority associated with respective ones of the elements and representing a relative importance thereof. An element for display can be provided on the basis of a visibility rule associated with an element. A display context can include a size, orientation and type of display and/or application window, and an input parameter includes a type of input device for an application or device. The application can be a cloud-based application and the destination display context is a context for a client device operable to remotely access the application. The measure of priority can be one of multiple measures of priority for elements. An element can be selected to be accessible within the GUI but not visible. The selected element can be accessible using an input mechanism, and accessing the element can cause it or an element associated with it to be made visible in the GUI.

According to an example, there is provided a system for generating a layout for a GUI for an application, comprising a memory to store multiple settings representing user preferences for the GUI in at least one display context, a processing layout generation module arranged to generate a measure representing available space for multiple elements of the GUI based on the display context and input parameters for the application, generate a GUI using the multiple elements for the application for display according to the context, in which the multiple elements are selected for display according to a measure of priority associated with respective ones of the elements representing a relative importance. The module can further be arranged to receive data representing the display context and input parameters for the application, receive data representing a priority measure for the multiple elements defining a suppression characteristic for the elements, render the selected elements for display according to the display context and input parameters for the application and respective ones of the priority measures. The module can be arranged to select an element to be accessible within but not visible in the GUI. The module can be arranged to make the selected element accessible using an input mechanism, and to cause it or an element associated with it to be made visible in the GUI. The module can further be arranged to provide an element for display on the basis of a visibility rule associated with the element. The application can be a cloud-based application and the destination display context is a context for a client device operable to remotely access the application. The module can further be operable to select multiple elements for display and to alternately render the selected multiple elements according to a predefined schedule and using a predefined transition.

According to an example, there is provided a computer program product, comprising a computer usable medium having computer readable program code embodied therein, said computer readable program code adapted to be executed to implement a method as provided above for generating a layout for a GUI for an application.

### BRIEF DESCRIPTION OF THE DRAWINGS

Embodiments will now be described, by way of example only, with reference to the accompanying drawings, in which:
Figure 1 is a schematic block diagram of a portion of a GUI according to an example;
Figure 2 is a schematic representation of a priority mapping for the elements of figure 1;
Figure 3 is a schematic block diagram of a system according to an example; and
Figure 4 is a schematic block diagram of a method for generation or rendering of a GUI according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

As used herein, the term widget or element refers to a component of a user interface, such as a button, menu item, or any other graphical element, graphical display element or user interaction element.

According to an example, a processing layout generation module can be used to associate settings with a display and window configuration that is used each time an application is accessed. In addition, a reconfigurable layout mechanism enables automatic reconfiguration of the layout of widgets displayed within an application window according to the display and window configuration used each time an application is accessed.

The module operates according to the following:
- settings related to appearance, including those related to text settings and placement and layout of windows and generally widgets within the desktop environment are automatically associated by the GUI sub-system to the display size and/or type as known to the GUI subsystem (including such information as whether the input is operated through a mouse, mousepad or display touch interface or similar for example); in a virtual desktop scenario, this can be the size of the physical display used by the remotely connected client, or the size of a virtual display as exposed by the virtual desktop environment (e.g., smaller, if the whole virtual desktop runs within a dedicated window on the client that can be resized; in some GUI sub-systems it is also possible to define virtual desktop sizes that are larger than the physical display);
- when a user customizes any of these settings and saves them, they are stored as associated to the current display in use;
- the customization application allows various settings automatically created and stored for the various types of displays to be managed; propagating any of the modified settings from one stored display profile to the any others.

According to an example, a processing layout generation module is arranged so that:
- settings related to appearance, including those related to text settings and placement and layout of widgets within a single application window (e.g., the position of a dockable pane on right, left, top or bottom of the application window, or as a detached window, as reconfigured by the user by dragging it around), or within the various windows of a multi-window application GUI, are automatically associated by the GUI sub-system to the specific overall display size and optionally the type, and/or the specific size configured by the user for the window; not all window size configurations can be useful enough to be stored, and so only some particularly relevant statuses might be actually designated for such purposes (the user might anyway customize which configurations to keep). For example, when a window is maximized at full-screen, or when it is configured to use half vertical or half horizontal screen, or just a "quarter" of the available screen size (these are configurations normally made easily available/reachable by the GUI sub-system through proper mouse/touch interactions and/or key shortcuts);
- the graphic elements to be displayed in an application GUI are prioritized, in such a way that, depending on the display size and/or type and/or type of input interaction device and/or window size and/or layout status, the highest priority elements can be displayed, leaving the lower priority elements accessible by other means;
- it is possible for a developer to specify generic visibility rules that decide whether or not a GUI element or group of elements is visible, and/or decide which priority is dynamically assigned to the elements depending on the result of generic expressions involving the size and/or type of the display size and/or application window size;
- in an example, when a GUI element is hidden, all the elements contained within it are also automatically hidden;
- GUI elements that are not, after application of the above prioritization and visibility rules, need not merely be hidden; these elements can be created anyway, but can be made accessible and visible through some mechanism whose specifics is left to the GUI sub-system, for example automatically adding a multi-pane widget or a pop-up dialog allowing a user to reach the hidden elements.

According to an example, the above can be realized by extending the functionality offered by a GUI framework. For example, in a touch interface, a user might prefer to use bigger or smaller fonts or buttons that would make the GUI elements more easily accessible according to his/her own tastes (and physiological characteristics, such as the age and/or fingers size). If using a big monitor (e.g., a HDTV or set-top box connected to a TV in a living room), the user might prefer far bigger GUI elements, including font and buttons size, as compared to when using a standard monitor-on-the-desk set-up. If using a specific input device, such as a pointing device, the user might prefer a different arrangement of windows. If the display is very big, such as a huge wall display, then the WM can logically partition it and make only a part of it available to the virtual desktop running in the remote cloud (leaving the rest of the space for Picture-In-Picture-type of TV playback or other remote virtual desktops); in such a case, a remote desktop can behave as if its available space is merely the one logically made available to it by the WM.

In an example, a reconfigurable layout mechanism can be realized as additional sub-class of a layout system, or by adding further functionality to the existing classes for example. For example, when adding a widget, it is possible to specify the priority of the GUI elements that are being added. In order to preserve backward compatibility with existing GUI frameworks, when the priority is not specified it can be assumed to be the highest priority, meaning that the element will be always shown.

When such an extended layout class specified that one or more of the contained widgets are not shown in a display, it can make them available via further alternative means, including, for example:
- the automatic creation of a paned widget/view including all the highest priority widgets by default, but making the lower priority ones accessible by selecting the additional panes (which have been automatically created and managed by the layout itself); switch among panes can be handled by classical clicking for example, but on touch interfaces gesture-based "swiping" or similar among the available panes can be used (e.g., swiping towards right and left one might browse among basic options and advanced options of some GUI element, if being shown on a small display or in a small window, whilst on a big display/window all options can be readily accessible at once);
- the creation of a pop-up dialog, to be reached via a button or icon to be shown within the parent widget associated to the reconfigurable layout that cannot show all of its contained widgets; the popped up dialog can display the additional widgets that were hidden by the layout due to lack of space, and allow scrolling among all of the additional ones, if they would not fit, again arranged by priorities for example; such a dialog could be popped up by using a standard "menu" button available within the GUI framework; for example, a menu button can be accessible somewhere from the border of a tablet display, giving access to additional options possibly available for the application; a specific system button made automatically available among those options might give users access to the additional GUI sub-widgets available (but which had to be hidden) in various parts of the application interface;
- a possible layout can include switching among multiple priority widgets periodically, such as in a round-robin fashion, particularly if items at the same priority would still not fit within the available space. As such, mechanisms to control a round-robin time-slice, as well as to disable it if desired can be provided if a user is particularly sensitive to or annoyed by continuous transitions for example;
- the automatic creation of a scrolled widget/view where the highest priority sub-widgets would show first, then scrolling the widget view back and forth one can reveal the other hidden lower-priority widgets;
- a layout component can be customized in particular cases, e.g., a button showing both a label and an icon, might simply put the label on a lower priority, so that it is hidden if convenient for space reasons; in such a case, the label can conveniently be shown as a tool-tip when hovering with the mouse over the button, or when long-pressing the button if acting through a touch interface.

According to an example, visibility rules can be specified by means of configuration files that describe the layout of widgets. For example, a set of user interface XML files (with a .ui extension for example) can be edited directly through a typical GUI design system, and used to automatically create GUI elements. In addition, said rules can also be programmatically specified by the developer implementing a dedicated interface made available through the programming framework and API.

As an example, an extended syntax allowing for a prioritized set of elements in an extended QHBoxLayout class is provided in the following XML fragment:

```
 <layout class="QReconfHBoxLayout" >
   <item priority="1">
    <widget class="QLabel">
    ...
    </widget>
   </item>
   <item priority="2">
    <widget class="QLineEdit">
    ...
    </widget>
   </item>
 </layout>
```

The above example would present the user with a text entry box (having a higher priority) with an optionally visible descriptive label on the left (having a lower priority), that would be suppressed if needed for space reasons.

Similarly, a visibility rule might be specified as:

```
 <layout class="QReconfVBoxLayout" >
   <item showif="input.type==touch">
    <widget class="...">
    ...
    </widget>
   </item>
   <item showif="available.height >= 246px AND preferences.advanced==true">
    <widget class="...">
    ...
    </widget>
   </item>
 </layout>
```

In this example, the first widget is shown when using a touch interface, whilst the second widget is shown if the available height for it is greater than 246 pixels and there is a user preference with name "advanced" set to the value of "true". Many other examples are possible as will be appreciated.

As a further example, the C-like expression syntax (condition ? value_if_true : value_if_false) can be used in a construct such as:

```
  <item priority="available.height >= 246px AND preferences.advanced==true ? 1 : 2">
    <widget class="...">
    ...
    </widget>
  </item>
```

Thus, a method and system according to an example makes it easier for application developers to create flexible user interfaces for applications that can adapt to a number of display and accessibility scenarios. It can be useful for scenarios in which GUI-enabled applications running in the cloud are made accessible through a virtual desktop mechanism, in which the user connects from a potential high variety of heterogeneous devices, including smartphones, tablet PCs, smart TVs, laptops, and so on. It can also be useful for applications running natively on a mobile device such as a laptop, but also notebook, PDA, smartphone, possessing a video output that can be connected to a varying and heterogeneous set of displays, such as large monitor, smaller monitor, laptop display, or even using a remote connection through a tablet PC or a smartphone. As a side effect, it is also useful for standard desktop GUI-enhanced applications in conditions where the user may wish to heavily resize the application window for example. A system and method according to an example can be adapted to HTML and web pages design, if desired. In such a context, the priority can be different from the priority concept as defined in CSS, allowing the control of how multiple overlapping HTML fragments can stack on each other in the final display for example.

The system and method obviates the need for application developers to have to explicitly code all the application logic that is needed to develop applications for mobile devices, as well as for virtualized cloud infrastructures with a GUI that adapts automatically and dynamically to the type and size of display device and user interaction type. Such a task is very tedious and almost prevents the write-up of application GUIs that can be highly reusable in heterogeneous accessibility conditions, or it is overly expensive in terms of the time needed to develop and test the needed custom logic within the application.

The proposed mechanism allows application GUI designers and developers to think in terms of a more flexible GUI interaction model, focusing on the elements that are essential for interacting with the application, allowing for the visualization of additional elements if the space and conditions allows that and/or make it convenient/useful.

Accordingly, a method and system as described herein provides an adaptive GUI for use in heterogeneous environments that can expose a GUI for a user that is flexible and adaptable, and which can seamlessly adapt to the conditions of use. In an example, for a GUI that is composed of multiple elements, such as graphical display elements or user interaction element for example, one or more elements can be suppressed in the generation of a GUI for a specific display context, for example if the element(s) in question cannot be displayed due to size constraints. Accordingly, the rendering of a GUI, and more specifically the elements that go to make up a GUI, can be rendered to match the size and limitations imposed by the display context in question. Elements that would otherwise have been rendered, but cannot due to the limitations, can be hidden, but made accessible by other means.

In this connection, elements can be assigned a measure of priority that can be used to determine elements to render and elements to otherwise 'hide' in the event that the display context imposes some limitations for the GUI in question. In an example, multiple levels of priority can be provided. Relatively higher priority level elements can be rendered until there is no space left for any other elements. At this point, relatively lower priority level elements can be hidden from view, but otherwise accessible, or can be omitted altogether as desired.

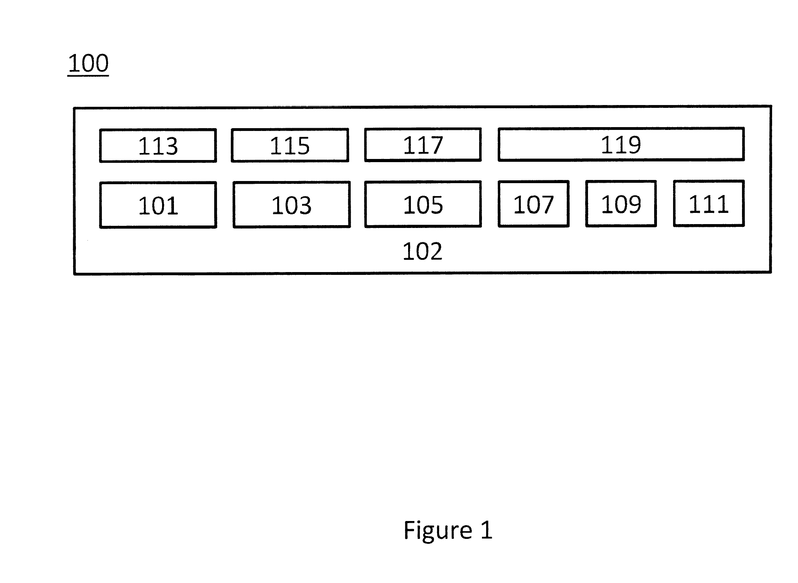

Figure 1 is a schematic block diagram of a portion of a GUI 100 according to an example. Multiple elements are provided in a pane 102, which can be part of a larger visual element of the GUI, such as a task bar or menu bar for example. Elements 101, 103 and 105 have associated labels 2113, 115, 117. A set of elements 107, 109, 111 has an associated label 119.

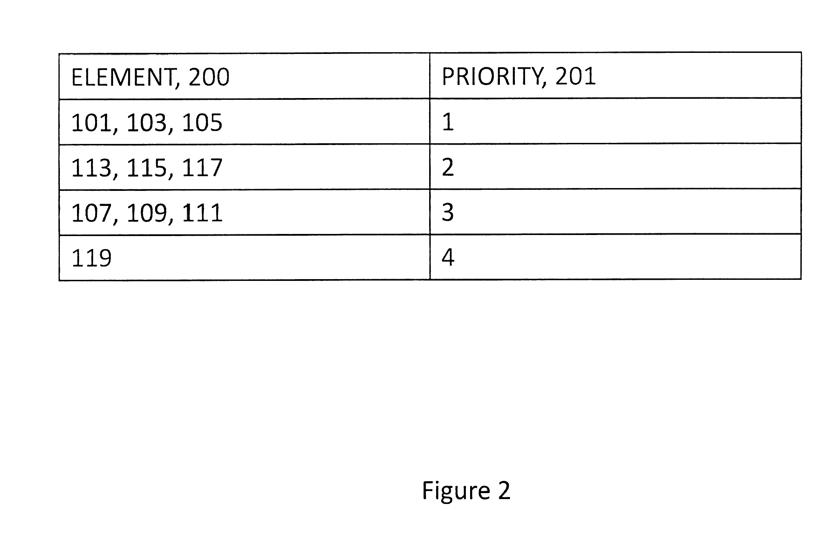

Figure 2 is a schematic representation of a priority mapping for the elements of figure 1. Elements 200 are assigned a priority 201. In the example of figure 2, a lower number indicates a higher level of priority, such that elements 101, 103 and 105 have a higher priority than the rest of the elements 200.

According to an example, in the rendering of a GUI in which elements 200 would be present, a display context and input parameters for an application with the GUI is associated are used to render the multiple elements of the GUI according to the display context such that the multiple elements are selected for display according to the measure of priority associated with respective ones of the elements. The measure 201 represents a relative measure of importance of an element 200, and therefore indicates if the element should be rendered, displayed or otherwise made available in preference to other elements.

Multiple settings representing user preferences for the GUI in at least one display context can be provided. For example, user preferences relating to one or more display settings can be provided or stored for a user, representing a screen resolution, device, screen orientation and so on. The preferences can relate to devices that the user uses, such as a home laptop, work desktop machine, PDA, tablet and so on. Input parameters can also be included that represent the ways in which input can be provided for the devices in question. For example, a tablet can receive user input using a touch screen, and a desktop can receive input using a keyboard and/or mouse and so on. The preferences and parameters can be used to provide a profile for a device that provides information relating to the screen size, orientation and resolution of a device, as well as the way that input can be received by the device. Such information can be used in order to render a GUI in a display that enables the elements of the GUI to be arranged so that the available space is optimized. In an example, this means that the display of certain selected elements is suppressed in favour of other elements. More specifically, elements with a relatively lower priority measure associated with them are not rendered for the GUI if relatively higher priority elements have been rendered and the display context and/or input parameters indicates that there is no display real estate remaining or no remaining display real estate that is suitable for the lower priority elements that have not been rendered.

In an example, a processing layout generation module is arranged to generate a measure representing available space for multiple elements of the GUI based on such display context and input parameters for the application. The module can receive data representing the context and parameters from a remote source, such a database arranged to store such data. The module can generate a GUI using the multiple elements for the application for display according to the context, in which the multiple elements are selected for display according to a measure of priority associated with respective ones of the elements, and representing their relative importance as described above.

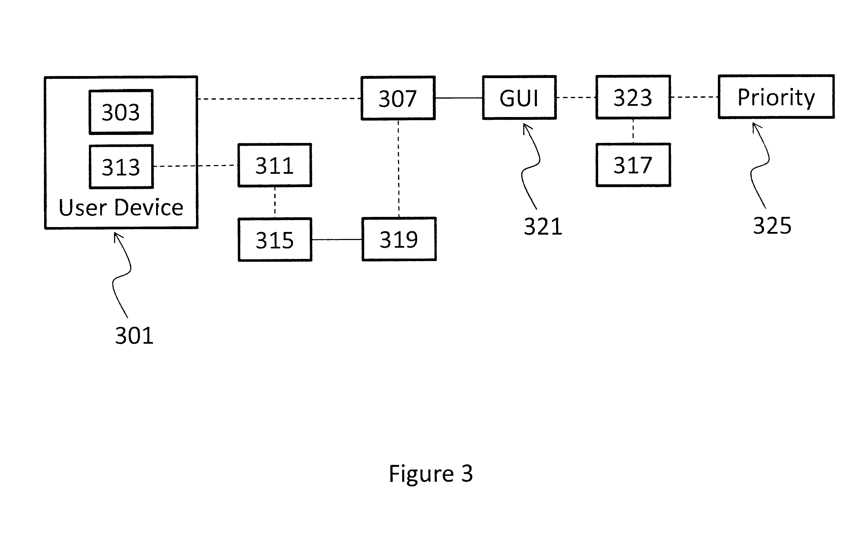

Figure 3 is a schematic block diagram of a system according to an example. A user device 301 includes a display 303 with a display context and a set of input parameters. The display context specifies at least the display real estate for use by a GUI of an application 307 and a display resolution. Data 311 representing the display context and the input parameters can be stored in a memory 313 of the device 301, or can be remotely stored, such as in physical storage 315 accessible via a cloud-based service or application with which the device 301 can communicate using the internet for example.

A processing layout generation module 317 is provided in device 301 or as a module operating on physical hardware accessible via a cloud-based service. In an example, the service can be executed in a virtual machine for example. An application 307 can be executed on device 301 or can be executed remotely and be accessible by the device. For example, the device 301 can provide a virtual desktop environment for a user, such that application 307 is remotely executed on physical hardware 319 and is accessible to the device 301 via a cloud-based infrastructure as broadly illustrated in figure and as is typical. A GUI 321 for application 307 enables a user of device 301 to interact with the application 307 and perform tasks by manipulating and interacting with graphical elements of the GUI as is known.

Module 317 generates a measure representing available space for multiple elements 323 of the GUI 321 based on the display context and input parameters 305 for the application. Module 317 can then generate GUI 321 using the multiple elements 323 for the application 307 for display according to the context, in which the multiple elements are selected for display according to a measure of priority 325 associated with respective ones of the elements representing a relative importance.

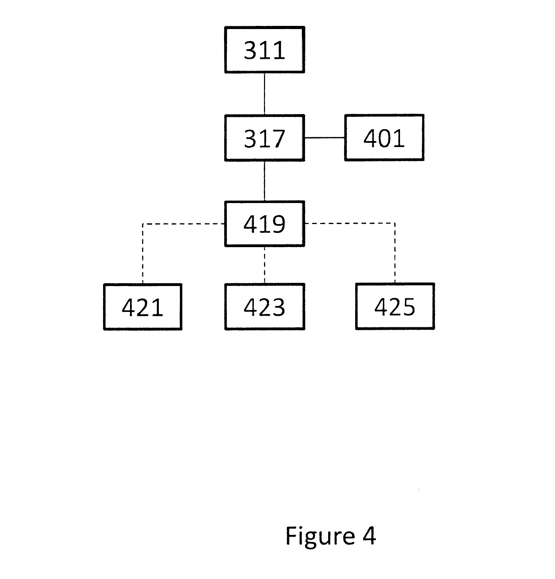

Figure 4 is a schematic block diagram of a method for generation or rendering of a GUI according to an example. Module 317 receives or includes data representing a display context and input parameters for a display of a device. Data 401 representing a GUI for an application can be provided. Data 401 includes information representing settings related to appearance of the GUI, including those related to text settings and placement and layout of windows and widgets. The data 401 can include a measure of priority for respective ones of the elements/widgets for the GUI. Alternatively, respective priority measures can be provided separately. Module 417 uses the priority measure and display context and input parameters to render elements for the GUI at block 419. According to the available display space, elements can be rendered and be visible(421), can be visibly suppressed but operative (423), or completely suppressed (425). Elements that are visibly suppressed but operative can be hidden from view, that is not rendered in the GUI, but can be accessible by other means. For example, when using a conventional display and input mechanisms, such as a monitor and keyboard/mouse, a hidden element can be accessed by hovering a pointer over a region of the GUI for a certain period of time. A hidden element which is otherwise not displayed or rendered due to constraints associated with the display context for example can be made visible so that other elements are suppressed, such as temporarily for example, while the other element is made visible, or a tool tip or other such informational object can be provided for a user. In a touch display context, a 'touch and hold' type operation can be used in order to access a suppressed element of a GUI. In an alternative, a swiping operation on a touch display can be used to access elements that have been suppressed or otherwise rendered on an alternative and not immediately visible portion of a display area. For example, multiple areas can be provided that can be accessed by a certain touch operation, such as a swipe. Relatively higher priority elements can be rendered in an initially visible (by default for example) area, whilst other relatively lower priority elements can be rendered on other areas that only become visible when the user performs an operation to access these areas. Similar considerations apply in the case of a non-touch system, where multiple areas can be provided and accessed.

According to an example, available display space can be filled with elements for a GUI of an application according to priority until the space is filled. For example, all priority measure 1 elements can be rendered. If there is still space, priority 2 elements can be rendered. If there is still space, priority 3 elements can be rendered, and so on. Therefore, given multiple such level of priority for elements of a GUI which can be added at they are coded or developed for example, a separate GUI for an application, and thus application itself, need not be coded for each platform.

In an example, a visibility rule can be provided to specify whether or not a GUI element or group of elements is visible, depending on the size and/or type of the display size and/or application window size. Such visibility rules can also mix generic user-specified preferences, if needed, in order to decide on the visibility of certain elements.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A computer-implemented method for generating a layout for a Graphical User Interface (GUI) for an application to be shown in a destination display context, comprising:
generating a measure representing available space for multiple elements of the GUI based on the display context and input parameters for the application;
generating a GUI using the multiple elements for the application for display according to the context, in which the multiple elements are selected for display according to a measure of priority associated with respective ones of the elements and representing a relative importance thereof.

2. A method as claimed in 1, further comprising:
providing an element for display on the basis of a visibility rule associated with an element.

3. A method as claimed in claim 1 or 2, wherein a display context includes a size, orientation and type of display and/or application window, and an input parameter includes a type of input device for an application or device.

4. A method as claimed in any preceding claim, wherein the application is a cloud-based application and the destination display context is a context for a client device operable to remotely access the application.

5. A method as claimed in any preceding claim, wherein the measure of priority is one of multiple measures of priority for elements.

6. A method as claimed in any preceding claim, further including selecting an element to be accessible within the GUI but not visible.

7. A method as claimed in claim 6, wherein the selected element is accessible using an input mechanism, and in which accessing the element causes it or an element associated with it to be made visible in the GUI.

8. A system for generating a layout for a GUI for an application, comprising:
a memory to store multiple settings representing user preferences for the GUI in at least one display context;
a processing layout generation module arranged to:
generate a measure representing available space for multiple elements of the GUI based on the display context and input parameters for the application;
generate a GUI using the multiple elements for the application for display according to the context, in which the multiple elements are selected for display according to a measure of priority associated with respective ones of the elements representing a relative importance.

9. A system as claimed in claim 8, the module further arranged to:
receive data representing the display context and input parameters for the application;
receive data representing a priority measure for the multiple elements defining a suppression characteristic for the elements;
render the selected elements for display according to the display context and input parameters for the application and respective ones of the priority measures.

10. A system as claimed in claim 9, the module arranged to select an element to be accessible within but not visible in the GUI.

11. A system as claimed in claim 9, the module arranged to make the selected element accessible using an input mechanism, and to cause it or an element associated with it to be made visible in the GUI.

12. A system as claimed in any of claims 8 to 11, the module further arranged to provide an element for display on the basis of a visibility rule associated with the element.

13. A system as claimed in any of claims 8 to 12, wherein the application is a cloud-based application and the destination display context is a context for a client device operable to remotely access the application.

14. A system as claimed in any of claims 8 to 13, the module further operable to select multiple elements for display and to alternately render the selected multiple elements according to a predefined schedule and using a predefined transition.

15. A computer program product, comprising a computer usable medium having computer readable program code embodied therein, said computer readable program code adapted to be executed to implement a method for generating a layout for a GUI for an application as claimed in any of claims 1 to 7.

## Amended claims

### Amended claims in accordance with Rule 137(2) EPC.

1. A computer-implemented method for generating a layout for a Graphical User Interface (GUI) (100; 321) for an application (307) to be shown in a destination display context, comprising:
generating a measure representing available space for multiple elements (101-111, 200) of the GUI based on the display context and input parameters for the application (307);
generating (419) a GUI using the multiple elements (101-111, 200) for the application (307) for display according to the display context, in which the multiple elements (101-111, 200) are selected for display according to a measure of priority (201) associated with respective ones of the elements (101-111, 200) and representing a relative importance thereof; wherein a display context includes a size, orientation and type of display (303) and/or application window, and an input parameter includes a type of input device for an application (307) or device; and
wherein the measure of priority (201) for an element is determined at the time of generating the GUI (100; 321) using a visibility rule associated with the element (101-111, 200).

2. A method as claimed in claim 1, wherein the application (307) is a cloud-based application and the destination display context is a context for a client device (301) operable to remotely access the application (307).

3. A method as claimed in any preceding claim, wherein the measure of priority (201) is one of multiple measures of priority for elements (101-111, 200).

4. A method as claimed in any preceding claim, further including selecting (423) an element (101-111, 200) to be accessible within the GUI (100; 321) but not visible.

5. A method as claimed in claim 4, wherein the selected element (101-111, 200) is accessible using an input mechanism, and in which accessing the element (101-111, 200) causes it or an element (101-111, 200) associated with it to be made visible in the GUI (100; 321).

6. A system for generating a layout for a GUI (100; 321) for an application (307), comprising:
a memory (313) to store multiple settings representing user preferences for the GUI (100; 321) in at least one display context;
a processing layout generation module (317; 417) arranged to:
generate a measure representing available space for multiple elements (101-111, 200) of the GUI (100; 321) based on the display context and input parameters for the application (307);
generate (419) a GUI (100; 321) using the multiple elements (101-111, 200) for the application (307) for display according to the display context, in which the multiple elements (101-111, 200) are selected for display according to a measure of priority (201) associated with respective ones of the elements (101-111, 200) representing a relative importance;
wherein a display context includes a size, orientation and type of display (303) and/or application window, and an input parameter includes a type of input device for an application (307) or device; and
wherein the measure of priority (201) is determined at the time of generating the GUI (100; 321) using a visibility rule associated with an element (101-111, 200).

7. A system as claimed in claim 6, the module further arranged to;
receive data (401) representing the display context and input parameters for the application;
receive data (401) representing a priority measure (201) for the multiple elements (101-111, 200) defining a suppression characteristic for the elements; and
render (421-425) the selected elements (101-111, 200) for display according to the display context and input parameters for the application (307) and respective ones of the priority measures (201).

8. A system as claimed in claim 7, the module (317; 417) arranged to select (423) an element (101-111, 200) to be accessible within but not visible in the GUI (100; 321).

9. A system as claimed in claim 7, the module (317; 417) arranged to make the selected element (101-111, 200) accessible using an input mechanism, and to cause it or an element (101-111, 200) associated with it to be made visible in the GUI (100; 321).

10. A system as claimed in any of claims 6 to 9, the module (317; 417) further arranged to provide an element (101-111, 200) for display on the basis of a visibility rule associated with the element (101-111, 200).

11. A system as claimed in any of claims 6 to 10, wherein the application (307) is a cloud-based application and the destination display context is a context for a client device (301) operable to remotely access the application (307).

12. A system as claimed in any of claims 6 to 11, the module (317; 417) further operable to select multiple elements (101-111, 200) for display and to alternately render the selected multiple elements (101-111, 200) according to a predefined schedule and using a predefined transition.

13. A computer program product, comprising a computer usable medium having computer readable program code embodied therein, said computer readable program code adapted to be executed to implement a method for generating a layout for a GUI (100; 321) for an application (307) as claimed in any of claims 1 to 5.
